# EUROPÄISCHE PATENTANMELDUNG

(11) **EP 4 300 900 A1**
(43) Veröffentlichungstag der Anmeldung: **03.01.2024**
(21) Anmeldenummer: 22182140.8
(22) Anmeldetag: 30.06.2022
(51) Int. Cl.: H04L 12/66, H04L 67/12, H04L 69/08, H04L 65/1023, H04L 69/329

(54) **GATEWAY UND VERFAHREN ZUM BETRIEB EINES GATEWAYS**

(71) Anmelder: Siemens Mobility GmbH, 81739 München (DE)
(72) Erfinder: Theuerkauf, Klaus, 39106 Magdeburg (DE); Reusch, Christian, 30455 Hannover (DE); Hagenbuck, Jasper, 38126 Braunschweig (DE); Neumann, Florian, 38159 Vechelde (DE)
(74) Vertreter: Siemens Patent Attorneys

(57) **Zusammenfassung**

Die Erfindung betrifft ein Gateway (1) zum Anschluss an ein geschlossenes Netzwerk (5) einer eisenbahntechnischen Anlage (1),
mit wenigstens einem Netzwerkadapter (6) zum Herstellen einer Netzwerkverbindung (13) mit einem von dem Netzwerk (5) der eisenbahntechnischen Anlage (1) externen Netzwerk, mit wenigstens einem Bildsignaladapter (7) zum Herstellen einer Bildsignalverbindung mit der eisenbahntechnischen Anlage (2), und/oder mit wenigstens einem Gerätesignaladapter (8) zum Herstellen einer Gerätesignalverbindung mit der eisenbahntechnischen Anlage (2), und mit wenigstens einer Umwandlungseinrichtung (9), die sowohl mit dem Netzwerkadapter (6) als auch mit dem Bildsignalgeber (7) und/oder dem Gerätesignaladapter (8) verbunden ist und die zum Umwandeln von Daten der Bildsignalverbindung und/oder Gerätesignalverbindung der eisenbahntechnischen Anlage (2) in Daten des externen Netzwerks ausgebildet ist.

Das erfindungsgemäße Gateway (1) bietet in vorteilhafter Weise einen besonders sicheren Zugang zu dem geschlossenen Netzwerk (5) der eisenbahntechnischen Anlage (2).

Die Erfindung betrifft auch ein Verfahren zum Betrieb eines Gateways (1) zum Anschluss an ein geschlossenes Netzwerk (5) einer eisenbahntechnischen Anlage (2).

## Beschreibung

Die Erfindung betrifft ein Gateway zum Anschluss an ein geschlossenes Netzwerk einer eisenbahntechnischen Anlage sowie ein Verfahren zum Betrieb eines solchen Gateways.

Eisenbahntechnische Anlagen und hierbei insbesondere die signaltechnischen Anlagen unterliegen einer hohen Sicherheit und damit besonderen Auflagen, um einen ungewollten Zugriff von außen zu vermeiden. Hier spielt die sogenannte Cybersecurity eine große Rolle, die einen bösartigen Zugriff auf die Signaltechnik der eisenbahntechnischen Anlage ausschließen soll. So wird beispielsweise größter Wert auf eine sichere Netzwerkarchitektur der signaltechnischen Systeme gelegt, die beispielsweise durch die Richtlinien für ein Kategorie 2 Netzwerk gemäß EN50159 festgelegt sind. Beispielsweise ist das Netzwerk der eisenbahntechnischen Anlage hiernach von anderen externen Netzwerken separiert und mit hohem Aufwand gesichert, so dass das Risiko eines nichtautorisierten Zugriffs auf das Netzwerk der eisenbahntechnischen Anlage von extern als vernachlässigbar eingestuft werden kann.

Trotzdem ist es häufig vorteilhaft, wenn ein sicherer Remotezugriff auf die eisenbahntechnische Anlage ermöglicht wird. Hierdurch kann beispielsweise ein Wartungsaufwand erheblich reduziert werden und mögliche Ausfallzeiten der eisenbahntechnischen Anlage verringert werden. Teilweise wird versucht, einen solchen Zugriff durch VPN-Tunneltechniken zu realisieren, die dann jedoch einen bösartigen Zugriff nicht komplett ausschließen können.

Es ist daher die Aufgabe der vorliegenden Erfindung, ein Gateway und ein Verfahren der eingangs genannten Art bereitzustellen, die einen sicheren Zugriff auf das Netzwerk einer eisenbahntechnischen Anlage ermöglicht.

Erfindungsgemäß wird die Aufgabe gelöst durch ein Gateway zum Anschluss an ein geschlossenes Netzwerk einer eisenbahntechnischen Anlage, mit wenigstens einem Netzwerkadapter zum Herstellen einer Netzwerkverbindung mit einem von dem Netzwerk der eisenbahntechnischen Anlage externen Netzwerk, mit wenigstens einem Bildsignaladapter zum Herstellen einer Bildsignalverbindung mit der eisenbahntechnischen Anlage, und/oder mit wenigstens einem Gerätesignaladapter zum Herstellen einer Gerätesignalverbindung mit der eisenbahntechnischen Anlage, und mit wenigstens einer Umwandlungseinrichtung, die sowohl mit dem Netzwerkadapter als auch mit dem Bildsignalgeber und/oder dem Gerätesignaladapter verbunden ist und die zum Umwandeln von Daten der Bildsignalverbindung und/oder Gerätesignalverbindung der eisenbahntechnischen Anlage in Daten des externen Netzwerks ausgebildet ist.

Weiterhin wird die Aufgabe gelöst durch ein Verfahren zum Betrieb eines Gateways zum Anschluss an ein geschlossenes Netzwerk einer eisenbahntechnischen Anlage, wobei das Gateway nach Art der Erfindung ausgebildet ist, und bei dem Verfahren Daten der Bildsignalverbindung und/oder Gerätesignalverbindung der eisenbahntechnischen Anlage in Daten des externen Netzwerks umgewandelt werden.

Die erfindungsgemäße Lösung hat den Vorteil, dass durch das erfindungsgemäße Gateway kein Netzwerkzugang von extern zur eisenbahntechnischen Anlage gewährt werden muss und trotzdem Bildsignale der eisenbahntechnischen Anlage in dem externen Netzwerk übermittelt werden können. Hierdurch ist eine hohe Sicherheit der eisenbahntechnischen Anlage weiterhin gewährleistet und daher kann beispielsweise auch der Status des Kategorie 2 Netzwerkes nach EN50159 gewährleistet werden.

Der Netzwerkadapter der erfindungsgemäßen Gateways stellt im Betrieb eine Netzwerkverbindung zu dem externen Netzwerk her, zu dem beispielsweise ein Benutzer, der einen sicheren Zugang zur eisenbahntechnischen Anlage herstellen möchte, Zugriff hat. Dieses externe Netzwerk kann beispielsweise ein geschlossenes Ethernet Netzwerk einer Firma oder aber auch das Internet sein.

Der Bildsignaladapter des erfindungsgemäßen Gateways stellt im Betrieb eine Bildsignalverbindung mit der eisenbahntechnischen Anlage her. Hierfür kann der Bildsignaladapter beispielsweise als ein HDMI-Anschluss ausgebildet sein, der per HDMI-Kabel mit der eisenbahntechnischen Anlage verbunden wird. HDMI-Anschlüsse sind weit verbreitet und es bieten sich dadurch viele Anschlussmöglichkeiten innerhalb der eisenbahntechnischen Anlage.

Der Gerätesignaladapter des erfindungsgemäßen Gateways stellt im Betrieb eine Gerätesignalverbindung mit der eisenbahntechnischen Anlage her. Der Gerätesignaladapter kann dabei beispielsweise als eine USB-Schnittstelle ausgebildet sein. USB ist dabei ein weit verbreiteter Standard, der dadurch per USB-Kabel viele Anschlussmöglichkeiten auf Seiten der eisenbahntechnischen Anlage bietet.

Die Umwandlungseinrichtung des erfindungsgemäßen Gateways wandelt im Betrieb die Bildsignaldaten und/oder Gerätesignaldaten der eisenbahntechnischen Anlage in Daten des externen Netzwerks um, die über den Netzwerkadapter in das externe Netzwerk eingespeist werden können. Durch die Umwandlungseinrichtung findet ein Protokollbruch zwischen dem externen Netzwerk und dem Netzwerk der eisenbahntechnischen Anlage statt. Durch den Protokollbruch besteht keine direkte Verbindung zwischen dem externen Netzwerk und dem Netzwerk der eisenbahntechnischen Anlage, so dass ein bösartiger Zugriff auf die eisenbahntechnische Anlage verhindert wird oder zumindest unwahrscheinlich ist. Das erfindungsgemäße Gateway emuliert mittels der Umwandlungseinrichtung eine Anzeigeeinrichtung, die an die eisenbahntechnische Anlage angeschlossen ist.

Die erfindungsgemäße Lösung kann durch vorteilhafte Ausgestaltungen weiterentwickelt werden, die im Folgenden beschrieben sind.

So kann die Umwandlungseinrichtung ebenfalls zum Umwandeln von Daten des externen Netzwerks in Daten der Bildsignalverbindung und/oder Gerätesignalverbindung der eisenbahntechnischen Anlage ausgebildet sein. Dies hat den Vorteil, dass von einem Benutzer, der an das externe Netzwerk angeschlossen ist, Bedienhandlungen mittels der Bildsignalverbindung bzw. Gerätesignalverbindung an der eisenbahntechnischen Anlage ausführen können. Das erfindungsgemäße Gateway in dieser Ausführungsform emuliert daher mittels der Umwandlungseinrichtung auch Geräte, die an die eisenbahntechnische Anlage angeschlossen sind. Die emulierten Geräte sind beispielsweise eine Tastatur, eine Maus oder ein Mikrophon. Mit dieser vorteilhaften Ausgestaltung der Erfindung kann in beide Richtungen agiert werden, d. h. aus dem externen Netzwerk in die eisenbahntechnische Anlage hinein und von der eisenbahntechnischen Anlage zum externen Netzwerk.

Um nicht jedem den Zugang in die eisenbahntechnische Anlage zu erlauben, kann das Gateway wenigstens einen Schlüsselschalter umfassen, durch den die Umwandlungseinrichtung zum Umwandeln von Daten des externen Netzwerks in Daten der Bildsignalverbindung und/oder Gerätesignalverbindung der eisenbahntechnischen Anlage aktivierbar ausgebildet sein. Der Zugang in diese Richtung ist als kritischer einzustufen, so dass durch den Schlüsselschalter eine höhere Sicherheit vor bösartigem Zugriff gegeben ist.

In einer weiteren vorteilhaften Ausgestaltung kann das Gateway wenigstens eine Authentifizierungseinrichtung aufweisen, die zum Authentifizieren eines Zugriffs auf Seiten des Netzwerkadapters ausgebildet ist. Dies hat den Vorteil, dass nur authentifizierte Personen einen Zugriff auf die eisenbahntechnische Anlage erlangen können. Hierdurch wird die Sicherheit der eisenbahntechnischen Anlage erhöht.

Ferner kann das Gateway wenigstens eine Audit-Protokolleinrichtung aufweisen, die zum Aufzeichnen von Zugriffshandlungen auf Seiten des Netzwerkadapters ausgebildet ist. Auch durch diese vorteilhafte Ausgestaltung kann die Sicherheit der eisenbahntechnischen Anlage auf einem hohen Niveau gehalten werden, weil auch im Nachhinein genau nachvollziehbar ist, wer Zugang über das erfindungsgemäße Gateway zu der eisenbahntechnischen Anlage hatte.

Um das erfindungsgemäße Gateway besonders einfach und unkompliziert an das Netzwerk der eisenbahntechnischen Anlage anschließen zu können, kann das Gateway zumindest teilweise beweglich in einem Gehäuse ausgebildet sein. Insbesondere kann das Gehäuse als ein leicht handhabbarer Koffer ausgebildet sein, der beispielsweise mittels Verbindungskabeln, wie ein HDMI-Kabel und/oder ein USB-Kabel, an die eisenbahntechnische Anlage angeschlossen wird.

Um das erfindungsgemäße Gateway möglichst einfach und kostengünstig auszugestalten, kann das Gateway wenigstens einen ersten mit einem Benutzer verbindbaren Teil und wenigstens einen zweiten mit der eisenbahntechnischen Anlage zum Herstellen der Gerätesignalverbindung und/oder Bildsignalverbindung verbindbaren Teil aufweisen und die Teile mittels einer Netzwerkverbindung miteinander verbunden und entfernt voneinander angeordnet sein können. Durch die Zweiteilung des erfindungsgemäßen Gateways kann dessen praktische Umsetzung stark vereinfacht werden. So kann beispielsweise der eine Teil innerhalb eines vorhandenen Firmennetzwerks ausgebildet sein, das beispielsweise bereits eine Authentifizierungseinrichtung und/oder Audit-Protokolleinrichtung aufweist, die für das erfindungsgemäße Gateway verwendet werden können. In dem zweiten Teil können die Merkmale des erfindungsgemäßen Gateways realisiert sein, die vorzugsweise nah an der eisenbahntechnischen Anlage positioniert sind, wie beispielsweise die Umsetzungseinrichtung, der Gerätesignaladapter und der Bildsignaladapter. Dieser Teil kann dann beispielsweise in einem mobilen Gehäuse wie einem Koffer ausgebildet sein. Die Verbindung der beiden Teile mittels der Netzwerkverbindung kann auf übliche Weise mit bekannter Technik erfolgen. Insbesondere kann die Netzwerkverbindung zwischen den Teilen als Funkverbindung, insbesondere als LTE Verbindung, ausgebildet sein.

In einer vorteilhaften Ausgestaltung des erfindungsgemäßen Verfahrens können ebenfalls Daten des externen Netzwerks in Daten der Bildsignalverbindung und/oder Gerätesignalverbindung der eisenbahntechnischen Anlage umgewandelt werden. Dies hat den oben mit Bezug auf das erfindungsgemäße Gateway bereits beschriebenen Vorteil, dass ein Austausch in beide Richtungen möglich ist.

Ferner kann ein Zugriff auf Seiten des Netzwerkadapters authentifiziert werden. Dies hat den ebenfalls bereits oben beschriebenen Vorteil, dass jeder Zugriff authentifiziert und damit nur vertrauenswürdigen Personen möglich ist.

Um ein Audit-Protokoll von allen Zugriffen zu erhalten, können Zugriffshandlungen auf Seiten des Netzwerksadapters aufgezeichnet werden.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind. Beispielsweise kann das Computerprogrammprodukt von einem Computer ausgebildet werden, der Teil des erfindungsgemäßen Gateways ist.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Die Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass dieses das erfindungsgemäße Gateway ausbildet.

Im Folgenden wird die Erfindung mit Bezug auf die beigefügten Zeichnungen erläutert.

### Es zeigen

- Fig. 1: eine schematische Darstellung einer beispielhaften Ausführungsform eines erfindungsgemäßen Gateways;
- Fig. 2: eine schematische Darstellung einer weiteren beispielhaften Ausführungsform eines erfindungsgemäßen Gateways;
- Fig. 3: eine schematische Darstellung einer weiteren beispielhaften Ausführungsform eines erfindungsgemäßen Gateways.

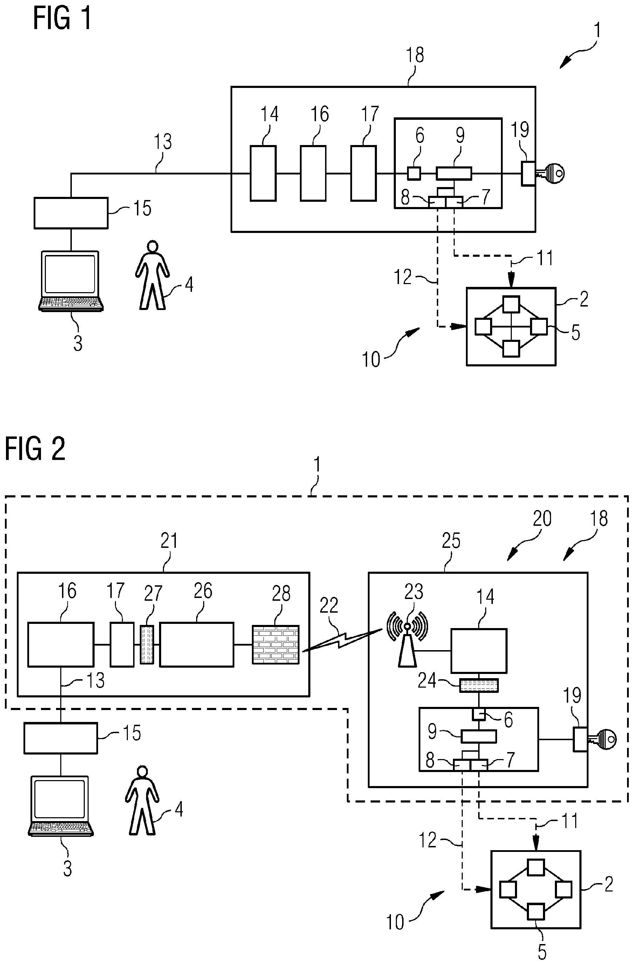

Zunächst wird die Erfindung mit Bezug auf Fig. 1 erläutert.

Fig. 1 zeigt ein erfindungsgemäßes Gateway 1 in einer beispielhaften Ausführungsform, eine eisenbahntechnische Anlage 2 und den Computer 3 eines Benutzers 4.

Die eisenbahntechnische Anlage 2 umfasst beispielsweise wenigstens eine U-Bahn, Straßenbahn, Fernbahn, einen Güterzug, also verschiedenste Schienenfahrzeuge zusammen mit ihrem Streckennetz und einer Signalanlage, die für eine Fahrzeugsteuerung oder Zugsteuerung verantwortlich ist. Wie bei allen modernen eisenbahntechnischen Anlagen üblich, umfasst auch die eisenbahntechnische Anlage 2 in Fig. 1 ein Netzwerk 5, in dem Daten zwischen verschiedenen Komponenten ausgetauscht werden. Dies kann ein geschlossenes Computer-Netzwerk sein, beispielsweise via Ethernet, das in üblicher Weise ausgeführt ist.

Um die Sicherheit der eisenbahntechnischen Anlage 2 zu gewährleisten, ist das Netzwerk 5 innerhalb der eisenbahntechnischen Anlage 2 als ein geschlossenes Netzwerk 5 ausgebildet. Es ist beispielsweise als ein Kategorie 2 Netzwerk gemäß EN50159 angelegt, für das besondere Anforderungen bzgl. der Abgeschlossenheit gelten. Ein einfacher Netzwerkzugang von außen zu dem Netzwerk der eisenbahntechnischen Anlage 2 ist bei der beispielhaften Ausführungsform in Fig. 1 aus Sicherheitsgründen nicht erwünscht.

Ein solcher Remotezugriff des Benutzers 4 mittels seines Computers 3 ist aber mit Hilfe des erfindungsgemäßen Gateways 1 dennoch möglich, wie im Folgenden beschrieben ist. Der Einfachheit halber ist von der eisenbahntechnischen Anlage 2 in den Figuren lediglich dessen geschlossenes Netzwerk 5 dargestellt.

Das Gateway 1 umfasst in der beispielhaften Ausführungsform in Fig. 1 einen Netzwerkadapter 6, einen Bildsignaladapter 7, einen Gerätesignaladapter 8 und eine Umwandlungseinrichtung 9. Das Gateway 1 ist über Signalleitungen 10 mit der eisenbahntechnischen Anlage 2 verbunden. Insbesondere ist der Bildsignaladapter 7 über eine HDMI-Leitung 11 mit dem Netzwerk 5 der eisenbahntechnischen Anlage 2 verbunden und dort mit einem entsprechenden Bildsignaladapter (nicht dargestellt) in Form eines HDMI Anschlusses verbunden. Ferner ist der Gerätesignaladapter 8 in der beispielhaften Ausführungsform in Fig. 1 über eine USB-Leitung 12 mit einem entsprechenden Gerätesignaladapter (nicht dargestellt), z. B. einem USB Anschluss, im Netzwerk 5 der eisenbahntechnischen Anlage 2 verbunden. Dies beides kann an einem Computer der eisenbahntechnischen Anlage 2 erfolgen.

Auf der anderen Seite ist das erfindungsgemäße Gateway 1 durch eine Netzwerkverbindung 13 mit dem Computer 3 des Benutzers 4 verbunden. Dabei ist die Netzwerkverbindung 13 an dem Netzwerkadapter 6 des Gateways 1 angeschlossen. Die Netzwerkverbindung 13 ist Teil eines externen Netzwerks (nicht dargestellt), das extern zum Netzwerk 5 der eisenbahntechnischen Anlage 2 ausgebildet ist. Der Computer 3 umfasst ebenfalls einen handelsüblichen Netzwerkadapter (nicht dargestellt), an dem die Netzwerkverbindung 13 angeschlossen ist. Der Computer 3 des Benutzers 4 ist ein handelsüblicher Computer wie beispielsweise ein Laptop, mit dem eine Netzwerkverbindung 13 möglich ist. Die Netzwerkverbindung 13 kann kabelgebunden, wie beispielsweise über Ethernet, oder auch zumindest teilweise kabellos per WLAN und Internet erfolgen.

Mit Hilfe des erfindungsgemäßen Gateways 1 wird dem Benutzer 4 über seinen Computer ein Remotezugriff zu dem Netzwerk 5 der eisenbahntechnischen Anlage 2 gewährt. Es besteht aber keine direkte Verbindung zwischen dem Computer 3 und dem Netzwerk 5 der eisenbahntechnischen Anlage 2. Vielmehr findet in dem Gateway 1 ein Protokollbruch statt, so dass die Verbindung vom Computer 3 als indirekt bezeichnet werden könnte und in jedem Fall als rückwirkungsfrei für das Netzwerk 5. Dadurch wird eine hohe Sicherheit für das Netzwerk 5 und die eisenbahntechnische Anlage 2 gewährt.

In dem Bildsignaladapter 7 des Gateways 1 kommen über die HDMI-Leitung 11 Bildsignale aus dem Netzwerk 5 der eisenbahntechnischen Anlage 2 in dem Gateway 1 an. Da die Umwandlungseinrichtung 9 mit dem Netzwerkadapter 6, dem Gerätesignaladapter 8 und auch dem Bildsignaladapter 7 verbunden ist, werden die Bildsignale aus dem Netzwerk 5 zur Umwandlungseinrichtung 9 übermittelt.

Die Umwandlungseinrichtung 9 wandelt nun die Bildsignale, also die Daten der Bildsignalverbindung mit dem Netzwerk 5, um in Daten, die über den Netzwerkadapter 6 in die Netzwerkverbindung 13 eingespeist werden können. Dieses Umwandeln der Datenformate in der Umwandlungseinrichtung 9 wird durch einen Mikroprozessor durchgeführt, der in der Umwandlungseinrichtung 9 enthalten ist. Dabei werden zunächst die Bildsignale aus dem Netzwerk 5 analysiert und anschließend in Daten eines Datenformats des externen Netzwerks der Netzwerkverbindung 13 umgewandelt. Man könnte hier auch von einem Übersetzen sprechen. Dieses Umwandeln ist nötig, weil das Datenformat der Bildsignalverbindung am Bildsignaladapter 7 unterschiedlich ist zum Datenformat am Netzwerkadapter 6. In dieser Umwandlung der Datenformate besteht der Protokollbruch, der die Sicherheit für die eisenbahntechnische Anlage 2 gewährleistet. Daten vom Netzwerkadapter 6 können nicht automatisch vom Bildsignaladapter 7 in das Netzwerk 5 eingespeist werden, weil die Datenformate unterschiedlich sind. Eine Übermittlung der Daten ohne die Umwandlungseinrichtung 9 wäre somit nicht möglich.

Nach der Umwandlung der Datenformate durch die Umwandlungseinrichtung 9 können die Bildinformationen aus dem Netzwerk 5 über die Netzwerkverbindung 13 zum Computer 3 übermittelt werden und dort angezeigt werden. So bekommt der Benutzer 4 auf seinem Computer 3, insbesondere auf seinem Monitor des Computers 3, Bildinformationen angezeigt, die ansonsten nur auf Anzeigeeinrichtungen innerhalb des Netzwerks 5 der eisenbahntechnischen Anlage zu sehen sind. Als Verbindung zwischen dem Bildsignaladapter 7 und dem Netzwerk 5 ist hier beispielsweise die HDMI-Leitung 11 gewählt, weil diese zurzeit üblich ist. Selbstverständlich kann die Verbindung auch mit anderen Bildsignalverbindungen realisiert werden.

Insbesondere um Eingaben des Benutzers 4 in das Netzwerk 5 der eisenbahntechnischen Anlage zu ermöglichen, ist das Gateway 1 auch zum Umwandeln von Gerätesignalen ausgebildet. Diese Gerätesignale werden in üblicher Weise auf dem Computer 3 durch den Benutzer 4 erzeugt, beispielsweise in Form von Eingaben in die Tastatur oder Mausbewegungen oder ähnliches. Diese Gerätesignale werden über die Netzwerkverbindung 13 zum Gateway 1 und insbesondere zum Netzwerkadapter 6 geleitet. In der Umwandlungseinrichtung 9 werden diese Gerätesignale analysiert und von der Umwandlungseinrichtung 9 in das entsprechende Datenformat für den Gerätesignaladapter 8 umgewandelt. Hier findet erneut ein Protokollbruch statt, so dass keine direkte Verbindung zum Netzwerk besteht. Der Gerätesignaladapter 8 ist bei der beispielhaften Ausführungsform 1 in Fig. 1 für das USB-Datenformat ausgebildet, das zurzeit allgemein üblich ist. Selbstverständlich können auch hier andere Datenformate gewählt werden, die für die Gerätesignale geeignet sind.

Über die USB-Leitung 12 werden diese übersetzten Gerätesignale in das Netzwerk 5 der eisenbahntechnischen Anlage 2 eingespeist. Auf diese Weise gelangen die Eingaben des Benutzers 4 über das erfindungsgemäße Gateway 1 in das Netzwerk 5 der eisenbahntechnischen Anlage 2, so als wenn der Benutzer 4 direkt innerhalb der eisenbahntechnischen Anlage 2 agieren würde. Die Umwandlungseinrichtung 9 des erfindungsgemäßen Gateways 1 emuliert daher die Bedienhandlungen des Benutzers 4, die dieser an seinem entfernt angeordneten Computer 3 durchgeführt hat. Dadurch erscheinen die Bedienhandlungen des Benutzers 4 so, als wenn sie innerhalb des Netzwerks 5 durchgeführt worden wären.

Das erfindungsgemäße Gateway 1 umfasst in der beispielhaften Ausführungsform in Fig. 1 weiterhin eine Verschlüsselungseinrichtung 14 zum Verschlüsseln und Entschlüsseln der Daten, die über die Netzwerkverbindung 13 übermittelt werden. Entsprechend ist auch auf Seiten des Computers 3 eine Verschlüsselungseinrichtung 15 angeordnet, sozusagen auf der anderen Seite der Netzwerkverbindung 13, die hier die Daten verschlüsselt bzw. entschlüsselt. Die Verschlüsselungseinrichtungen 14, 15 arbeiten hier in bekannter Weise beispielsweise mit symmetrischen Schlüsseln des PKI-Systems.

Das erfindungsgemäße Gateway 1 in der beispielhaften Ausführungsform in Fig. 1 umfasst weiterhin eine Authentifizierungseinrichtung 16 und eine Audit-Protokolleinrichtung 17.

Die Authentifizierungseinrichtung 16 ist zum Authentifizieren eines Zugriffs auf den Netzwerkadapter 6 des Gateways 1 ausgebildet. Hierdurch muss sich beispielsweise der Benutzer 4 mit seinem persönlichen Zertifikat authentifizieren, so dass nachvollziehbar, wer Zugriff auf den Netzwerkadapter 6 bekommt.

Die Audit-Protokolleinrichtung 17 ist zum Aufzeichnen von Zugriffshandlungen auf Seiten des Netzwerkadapters ausgebildet und gibt hierdurch eine erhöhte Sicherheit. Durch die Audit-Protokolleinrichtung wird aufgezeichnet, wer Zugriff auf den Netzwerkadapter 6 erhalten hat. Dies ist vorteilhaft, weil so auch im Nachhinein erfolgte Zugriffe auf das erfindungsgemäße Gateway aufgezeichnet sind. Die erzeugten Protokolldaten der Audit-Protokolleinrichtung 17 können auch an eine separate externe Stelle zur Speicherung übermittelt werden.

Das erfindungsgemäße Gateway 1 ist in der beispielhaften Ausführungsform in der Fig. 1 in einem gemeinsamen Gehäuse 18 ausgebildet, insbesondere in einem Koffer. Dies hat den Vorteil, dass das Gateway 1 mobil und leicht transportierbar ist und dadurch auf einfache Weise in die Nähe der eisenbahntechnischen Anlage 2 gebracht werden kann und mit dieser verbunden werden kann.

Das erfindungsgemäße Gateway 1 in der beispielhaften Ausführungsform in Fig. 1 umfasst weiterhin einen Schlüsselschalter 19, durch den die Umwandlungseinrichtung 9 zwischen zwei Modi umgeschaltet werden kann. In einem ersten Modus besteht lediglich eine unidirektionale Verbindung vom Netzwerk 5 der eisenbahntechnischen Anlage 2 in Richtung der Netzwerkverbindung 13 und dem Computer 3 des Benutzers 4. Dabei werden nur die Bildsignaldaten über den Bildsignaladapter 7 zum Netzwerkadapter 6 umgewandelt und übermittelt. Es besteht also nur ein Lesemodus. Die Übermittlung von Gerätesignalen zum Gerätesignaladapter 8 und damit in das Netzwerk 5 hinein ist unterbrochen. In den zweiten Modus ist diese Richtung der Datenübertragung aktiviert, so dass eine bidirektionale Verbindung zum Netzwerk 5 besteht. Da die Gerätesignale auch Handlungen in der eisenbahntechnischen Anlage 2 auslösen können, kann dieser Modus auch als Handlungsmodus bezeichnet werden.

Im Folgenden wird die Erfindung mit Bezug auf die beispielhafte Ausführungsform in Fig. 2 beschrieben. Der Einfachheit halber wird lediglich auf die Unterschiede zur Ausführungsform in Fig. 1 eingegangen. Gleiche Bezugszeichen bezeichnen auch gleiche Teile.

Das erfindungsgemäße Gateway 1 in der beispielhaften Ausführungsform in Fig. 2 umfasst zwei Teile. Ein erster Teil 20 umfasst die Umwandlungseinrichtung 9 den Netzwerkadapter 6, den Bildsignaladapter 7 und den Gerätesignaladapter 8 und ist wie bei der Ausführungsform in Fig. 1 über die Signalleitung 10 mit dem Netzwerk 5 der eisenbahntechnischen Anlage 2 verbunden. Der zweite Teil 21 ist mit dem Computer 3 des Benutzers 4 verbunden. Der erste Teil 20 und der zweite Teil 21 des Gateways 1 sind voneinander entfernt angeordnet und bei der beispielhaften Ausführungsform in Fig. 2 über ein mobiles Netzwerk 22 verbunden. Hierfür umfasst der erste Teil 20 ein Mobilfunkmodem 23, das bei der Ausführungsform in Fig. 2 beispielsweise ein LTE-Modem ist. Weiterhin umfasst der erste Teil 20 des Gateways 1 eine Firewall-Einrichtung 24, um eine Firewall zwischen dem Netzwerkadapter 6 und dem Mobilfunkmodem 23 einzurichten. Hierdurch wird die Sicherheit erhöht und einfache bösartige Angriffe, die beispielsweise durch das mobile Netz 22 erfolgen können, verhindert. Der erste Teil 20 des Gateways 1 ist ähnlich wie bei der Ausführungsform in Fig. 1 in einem Gehäuse 25 angeordnet, das ebenfalls als Koffer ausgebildet ist.

Der zweite Teil 21 des erfindungsgemäßen Gateways 1 bei der beispielhaften Ausführungsform in Fig. 2 ist stationär angeordnet und wird beispielsweise durch ein bestehendes Firmennetzwerk ausgebildet. Die Authentifizierungseinrichtung 16 und die Audit-Protokolleinrichtung 17 sind bei der beispielhaften Ausführungsform in Fig. 2 in dem zweiten Teil 21 vorgesehen. Dies ist von Vorteil, da diese Einrichtungen häufig bereits in Firmennetzwerken vorhanden sind und dadurch von dem erfindungsgemäßen Gateway 1 benutzt werden können. Weiterhin umfasst der zweite Teil 21 des Gateways 1 in der beispielhaften Ausführungsform in Fig. 2 eine weitere Verschlüsselungseinrichtung 26 und weitere Firewall-Einrichtungen 27 und 28.

Bei der Ausführungsform in Fig. 2 wird von Seiten des zweiten Teils 21 die Verbindung zum mobilen Netz 22 beispielsweise kabelgebunden über einen Betreiber des mobilen Netzes 22 hergestellt. Auf Seiten des ersten Teils 20 wird die Verbindung zum mobilen Netz 22 über das Mobilfunkmodem 23 hergestellt, das von dem Betreiber des mobilen Netzes 22 hierfür ertüchtigt ist, beispielsweise über eine entsprechende SIM-Karte, die den Zugang zu dem mobilen Netz 22 ermöglicht.

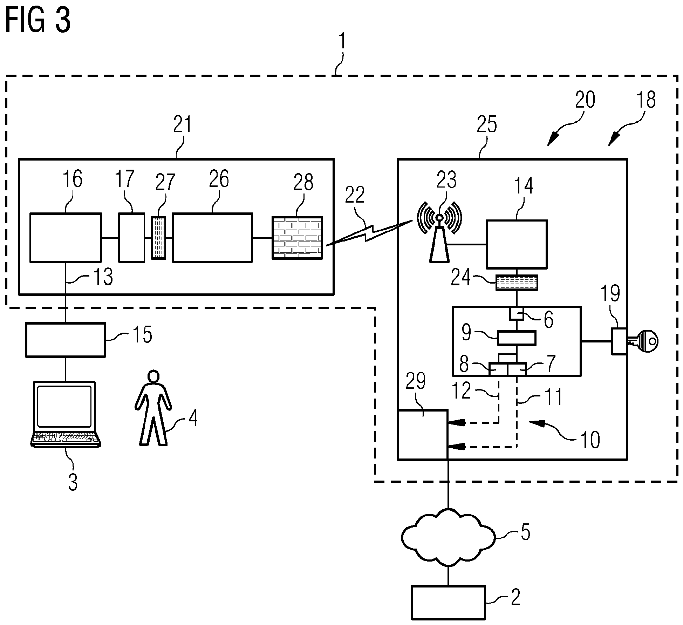

Im Folgenden wird die Erfindung anhand der weiteren beispielhaften Ausführungsformen in Fig. 3 beschrieben. Der Einfachheit halber wird hierbei nur auf Unterschiede zu der Ausführungsform in Fig. 2 eingegangen. Gleiche Bezugszeichen bezeichnen auch gleiche Teile.

Im Gegensatz zu der Ausführungsform in Fig. 2 umfasst das erfindungsgemäße Gateway 1 in seinem ersten Teil 20 einen zusätzlichen Netzwerkcomputer 29, der über die Signalleitungen 10 mit dem Signaladapter 7 und dem Geräteadapter 8 verbunden ist. Der Netzwerkcomputer 29 ist Teil des Netzwerks 5 der eisenbahntechnischen Anlage 2. Der Netzwerkcomputer 29 ist somit zwar im Gehäuse 25 des Gateways 1 angeordnet, aber gleichzeitig Teilnehmer im Netzwerk 5 der eisenbahntechnischen Anlage 2. Dabei ist der Netzwerkcomputer 29 durchaus räumlich entfernt von der übrigen eisenbahntechnischen Anlage 2 angeordnet und beispielsweise über eine kabellose oder kabelgebundene Verbindung angeschlossen.

## Patentansprüche

1. Gateway (1) zum Anschluss an ein geschlossenes Netzwerk (5) einer eisenbahntechnischen Anlage (1),
mit wenigstens einem Netzwerkadapter (6) zum Herstellen einer Netzwerkverbindung (13) mit einem von dem Netzwerk (5) der eisenbahntechnischen Anlage (1) externen Netzwerk,
mit wenigstens einem Bildsignaladapter (7) zum Herstellen einer Bildsignalverbindung mit der eisenbahntechnischen Anlage (2), und/oder
mit wenigstens einem Gerätesignaladapter (8) zum Herstellen einer Gerätesignalverbindung mit der eisenbahntechnischen Anlage (2),
und mit wenigstens einer Umwandlungseinrichtung (9), die sowohl mit dem Netzwerkadapter (6) als auch mit dem Bildsignalgeber (7) und/oder dem Gerätesignaladapter (8) verbunden ist und die zum Umwandeln von Daten der Bildsignalverbindung und/oder Gerätesignalverbindung der eisenbahntechnischen Anlage (2) in Daten des externen Netzwerks ausgebildet ist.

2. Gateway (1) nach Anspruch 1,
**dadurch gekennzeichnet, dass** die Umwandlungseinrichtung (9) ebenfalls zum Umwandeln von Daten des externen Netzwerks in Daten der Bildsignalverbindung und/oder Gerätesignalverbindung der eisenbahntechnischen Anlage (2) ausgebildet ist.

3. Gateway (1) nach Anspruch 2,
**dadurch gekennzeichnet, dass** das Gateway (1) wenigstens einen Schlüsselschalter (19) umfasst, durch den die Umwandlungseinrichtung (9) zum Umwandeln von Daten des externen Netzwerks in Daten der Bildsignalverbindung und/oder Gerätesignalverbindung der eisenbahntechnischen Anlage (2) aktivierbar ausgebildet ist.

4. Gateway (1) nach einem der oben genannten Ansprüche,
**dadurch gekennzeichnet, dass** das Gateway (1) wenigstens eine Authentifizierungseinrichtung (16) aufweist, die zum Authentifizieren eines Zugriffs auf Seiten des Netzwerkadapters (6) ausgebildet ist.

5. Gateway (1) nach einem der oben genannten Ansprüche,
**dadurch gekennzeichnet, dass** das Gateway (1) wenigstens eine Audit-Protokolleinrichtung (17) aufweist, die zum Aufzeichnen von Zugriffshandlungen auf Seiten des Netzwerkadapters (6) ausgebildet ist.

6. Gateway (1) nach einem der oben genannten Ansprüche,
**dadurch gekennzeichnet, dass** das Gateway (1) zumindest teilweise beweglich in einem Gehäuse (18) ausgebildet ist.

7. Gateway (1) nach einem der oben genannten Ansprüche,
**dadurch gekennzeichnet, dass** das Gateway (1) wenigstens einen ersten mit einem Benutzer (4) verbindbaren Teil (20) und wenigstens einen zweiten mit der eisenbahntechnischen Anlage (2) zum Herstellen der Gerätesignalverbindung und/oder Bildsignalverbindung verbindbaren Teil (21) aufweist und
die Teile (20, 21) mittels einer Netzwerkverbindung (13) miteinander verbunden und entfernt voneinander angeordnet sind.

8. Gateway (1) nach Anspruch 7,
**dadurch gekennzeichnet, dass** die Netzwerkverbindung (13) zwischen den Teilen als Funkverbindung, insbesondere als LTE Verbindung, ausgebildet ist.

9. Verfahren zum Betrieb eines Gateways (1) zum Anschluss an ein geschlossenes Netzwerk (5) einer eisenbahntechnischen Anlage (2),
wobei das Gateway (1) nach einem der oben genannten Ansprüche ausgebildet ist, und
bei dem Verfahren Daten der Bildsignalverbindung und/oder Gerätesignalverbindung der eisenbahntechnischen Anlage (2) in Daten des externen Netzwerks umgewandelt werden.

10. Verfahren nach Anspruch 9,
**dadurch gekennzeichnet, dass** ebenfalls Daten des externen Netzwerks in Daten der Bildsignalverbindung und/oder Gerätesignalverbindung der eisenbahntechnischen Anlage (2) umgewandelt werden.

11. Verfahren nach Anspruch 9 oder 10,
**dadurch gekennzeichnet, dass** ein Zugriff auf Seiten des Netzwerkadapters (6) authentifiziert wird.

12. Verfahren nach einem der oben genannten Ansprüche 9 bis 11,
**dadurch gekennzeichnet, dass** Zugriffshandlungen auf Seiten des Netzwerkadapters (6) aufgezeichnet werden.

13. Computerprogrammprodukt mit Programmbefehlen zur Durchführung des Verfahrens nach einem der Ansprüche 9 bis 12.

14. Bereitstellungsvorrichtung für das Computerprogrammprodukt nach Anspruch 13, wobei die Bereitstellungsvorrichtung das Computerprogrammprodukt speichert und/oder bereitstellt.
